# FASCICULE DE BREVET EUROPEEN

(11) **EP 1 763 398 B1**
(45) Date de publication et mention de la délivrance du brevet: **14.11.2012**
(21) Numéro de dépôt: 05771030.3
(22) Date de dépôt: 13.05.2005
(51) Int. Cl.: B01J 31/00, B01J 37/34, D06P 1/32

(54) **MOYENS POUR LA COLORATION DE SUPPORTS**
SUBSTRATFÄRBEMITTEL
SUPPORT-COLOURING MEANS

(30) Priorité: 14.05.2004 FR 0405305
(43) Date de publication de la demande: 21.03.2007
(73) Titulaire: Doublet, Luc, 7500 Tournai (BE); Doublet S.A., 59710 Avelin (FR)
(72) Inventeur: DOUBLET, Luc, 7500 Tournai (BE); THOMAS, Daniel, F-60150 Villers/Coudun (FR); BEDEL-CLOUTOUR, Catherine, F-60410 Verberie (FR); PULVIN-HOUDE, Sylviane, F-60200 Compiègne (FR); BEDOUET, Laurent, F-72000 Le Mans (FR)
(74) Mandataire: Peaucelle, Chantal
(86) Numéro de dépôt international: PCT/FR2005/001216
(87) Numéro de publication internationale: WO 2005/115613

(56) Documents cités:
- EP-A- 0 504 005
- EP-A- 1 342 831
- US-A- 5 281 523
- CONYERS S M ET AL: "CHROMOGENIC SUBSTRATES FOR HORSERADISH PEROXIDASE" ANALYTICAL BIOCHEMISTRY, ACADEMIC PRESS, SAN DIEGO, CA, US, vol. 192, 1991, pages 207-211, XP001042397 ISSN: 0003-2697 cité dans la demande

## Description

La présente invention a pour objet dés moyens, produits et procédé, pour la coloration de supports, matériaux inorganiques ou organiques, notamment matières vivantes comme la peau.

Il est connu d'imprimer des supports, tels que papiers et tissus, à l'aide d'encres. Ce type de technique est utilisé à l'heure actuelle par la Demanderesse pour effectuer la coloration de supports à partir des trois couleurs primaires (jaune, cyan et magenta) fournies par des encres, le noir étant obtenu en utilisant une encre noire, le blanc étant donné par le support lui-même. Le support à colorer est déroulé par exemple en feuille à travers une imprimante qui distribue, point par point, des gouttes d'encre de quelques nanolitres selon un dessin préfiguré, avantageusement par ordinateur. Le bras distribuant les encres doit passer cependant plusieurs fois au même endroit pour obtenir l'intensité souhaitée, ce qui consomme du temps.

De plus, certaines encres chimiques sont considérées comme polluantes pour l'environnement.

Des techniques basées sur l'utilisation d'enzymes ont été également rapportées. Ainsi, le brevet EP 1 342 831 décrit un procédé de coloration de tissus par voie enzymatique, comprenant le trempage du tissu dans une solution aqueuse comprenant un ou plusieurs composés aromatiques ou hétéroaromatiques, suivi du trempage du matériel trempé dans une solution aqueuse avec une source de peroxyde d'hydrogène et une enzyme présentant une activité peroxydase, ou avec une enzyme présentant une activité oxydase sur ledit ou lesdits composés aromatiques ou hétéroaromatiques.

Dans ce procédé, il n'existe aucun contrôle des éléments fixés au cours des différents trempages des échantillons, et tout particulièrement du catalyseur d'oxydation. Ce dernier n'est lié que par absorption et peut donc être éliminé au cours des lavages. De plus, les couleurs obtenues ne sont pas les couleurs primaires.

Les inventeurs ont constaté que ces problèmes pouvaient être surmontés en remplaçant ces encres et ces enzymes par des systèmes catalytiques photoactivables et capables de générer les trois couleurs primaires dont l'association peut conduire à des composés colorés.

L'invention a donc pour but de fournir de tels systèmes, ainsi qu'un procédé de génération de couleur sur un support reposant sur leur utilisation, dans lequel les couleurs ne sont révélées sur ledit support qu'au moment souhaité et à l'endroit souhaité.

Un autre but de la présente invention porte sur un procédé de coloration d'un support dans lequel ledit support puisse être réutilisé plusieurs fois afin de générer d'autres couleurs que celles initialement générées.

Le terme "support", tel qu'utilisé dans la description et les revendications, désigne des matériaux inorganiques ou organiques, notamment des matières vivantes comme la peau.

Les systèmes catalytiques utilisés selon l'invention pour la génération de couleurs sur un support sont caractérisés en ce qu'ils comprennent un ou plusieurs catalyseurs d'oxydation inactivés constitués par des hémoglobines inactivées par des groupes photolabiles constitués par un groupement - o-nitrophényle.

L'hémoglobine, et notamment l'hémoglobine bovine, est capable d'oxyder des substrats de la peroxydase : la réticulation de l'hémoglobine, visant à créer un phénomène d'amplification, permet de se rapprocher des performances de la peroxydase.

De manière avantageuse, les substrats de ces catalyseurs sont nombreux et sont disponibles à des prix peu élevés. Leur oxydation produit de nombreux composés colorés insolubles dans l'eau (Conyers et Kidwell (1991), Anal. Biochem., 192, 207-211).

Conformément à l'invention, les catalyseurs d'oxydation sont associés à des substrats chromogènes utilisés en combinaison avec des composés aromatiques.

Par « substrat chromogène», on entend des composés fonctionnant de manière réversible avec les catalyseurs et capables de conduire à un composé coloré après oxydation par le catalyseur et condensation avec les composés aromatiques.

De manière générale, les systèmes catalytiques de l'invention sont des systèmes capables d'être photoréactivés et de retrouver-une activité d'oxydation suffisante pour générer des couleurs.

Pour obtenir les 3 couleurs primaires (cyan, magenta et jaune), les substrats décrits par exemple par Conyers et Kidwell, (1991, précédemment cités) sont particulièrement appropriés car ils donnent rapidement des produits bleu et rouge insolubles, précipitant *in situ.*

On citera notamment l'hydrazone de la 3-méthyl-2-benzothiazolinone (MBTH) et des dérivés de la phénylènediamine, comme la diméthyl phénylènediamine et la diéthyl phénylènediamine.

Comme composés aromatiques utilisables pour réagir avec les substrats chromogènes oxydés et conduire à un précipité coloré, on citera les chtoronaphtols, les naphtalènediols, les aminophénols, les catéchols, les chlorophénols, le phénol, le gaïacol ou tout autre molécule appartenant soit à la famille des composés aromatiques mono-, di-, ou poly-cycliques, soit à la famille des dérivés hétéroaromatiques.

L'invention vise également un procédé de génération de couleurs sur un support, caractérisé en ce qu'il comprend, la réactivation sous l'effet d'un stimulus lumineux d'un ou plusieurs catalyseurs d'oxydation inactivés, tels que définis ci-dessus, imprégnant ledit support. Les catalyseurs d'oxydation sont donc temporairement inactivés pour permettre la mise en oeuvre de l'invention. Leur réactivation va permettre la génération de couleurs à l'endroit voulu, au moment souhaité.

De préférence, ce procédé comprend :
a) une étape d'inhibition photoréversible d'un ou plusieurs catalyseurs d'oxydation,
b) une étape d'immobilisation du ou des catalyseurs d'oxydation temporairement inactivé(s) tels qu'obtenus à l'issue de l'étape a) sur un support à colorer, ladite étape d'immobilisation étant notamment effectuée par trempage du support à colorer dans une solution comprenant le ou les catalyseurs d'oxydation inactivés,
c) une étape de stimulation lumineuse du support imprégné tel qu'obtenu à l'issue de l'étape b) permettant de réactiver le ou les catalyseurs d'oxydation temporairement inactivés,
d) une étape d'imprégnation du support sur lequel ont été immobilisés le ou les catalyseurs d'oxydation à l'issue de l'étape c), avec une solution comprenant un ou plusieurs substrats chromogène(s) et un ou plusieurs oxydants, permettant ainsi de développer les couleurs sur le support, à l'endroit activé par la stimulation lumineuse. L'étape a) est avantageusement réalisée en faisant réagir les catalyseurs d'oxydation mis en oeuvre avec des composés renfermant des groupements photolabiles comme défini plus haut. Des composés renfermant des groupements -O-nitrobenzyle sont à cet égard particulièrement avantageux. Ces composés peuvent se fixer en effet spontanément, par covalence, sur les acides aminés, en particulier du site actif, par exemple les motifs lysine, asparagine, glutamine ou encore cystéine. Pour la fixation sur des lysines, on utilisera ainsi avec avantage un composé tel que le 3,4-diméthoxy-O-nitrobenzyl- chloroformate. La réaction peut être effectuée en milieu aqueux. Pour la réaction avec des motifs comportant une fonction carboxylique, par exemple aspartique ou glutamique, on prépare un dérivé diazoéthane à partir d'un dérivé hydrazonoéthane.

L'étape b) comprend l'imprégnation d'un support avec le catalyseur en solution dans des conditions permettant d'obtenir l'intensité souhaitée pour une couleur.

Le support est par exemple un tissu formé de fibres naturelles, notamment en coton, et/ou de fibres synthétiques, ou en un matériau polymère, tel qu'un polyester. Il peut s'agir également de papier.

La solution de catalyseur est avantageusement une solution aqueuse et renferme des quantités de catalyseur de l'ordre de 50 à 200 µg/mL pour Hb avec une gamme de pH de 4 à 6 environ.

Avant l'étape b) d'immobilisation, on procède avantageusement à une étape préalable d'imprégnation du support à colorer avec une solution comprenant un ou plusieurs additifs capables de lier le ou les catalyseurs d'oxydation avec le support à colorer.

Selon un mode de réalisation du procédé de l'invention, lorsque le support à colorer est un tissu synthétique, on procède à une étape d'imprégnation préalable par de l'alginate, notamment de l'alginate de calcium : la présence de ce polysaccharide acide rend possible l'immobilisation d'une quantité importante de catalyseur d'oxydation sur le tissu par liaison covalente après activation des fonctions carboxyliques en fonctions esters NHS par le couple carbodiimide hydrosoluble [EDC] : *N*-Ethyl-*N*'-(3-diméthylaminopropyl) carbodiimide, N-Cyclohexyl-N'-(2morpholinoéthyl) carbodiimide métho-p-toluènesulfonate / hydroxysuccinimide (NHS).

Dans l'étape d'imprégnation préalable, l'alginate présent à la surface du tissu (1 cm²) est activé dans l'eau pendant 5 à 30 min. par le couple EDC/NHS (200 µg/200) dans un volume variant de 2 à 4 mL environ.

Le tissu activé est plongé dans une solution de catalyseur d'oxydation aux concentrations précisées préalablement, maintenue entre un pH de 6 à 7. La durée de couplage varie de 30 à 90 min environ.

Selon une autre disposition préférée de l'invention, à l'issue de l'étape préalable d'activation et d'imprégnation du support à colorer avec une solution comprenant un ou plusieurs additifs, on procède à une étape de séchage. Le séchage est avantageusement réalisé à froid pour ne pas endommager les catalyseurs.

La stimulation lumineuse nécessaire à la réactivation a lieu à 366 nm pendant 5 à 30 min.

Pour l'étape d), on imprègne le support avec une solution renfermant un ou plusieurs substrats chromogènes, qui sont des substrats pour le catalyseur, un ou plusieurs composés aromatiques et un ou plusieurs agents oxydants.

Les concentrations en substrats varient de 1 à 4 mM et les concentrations en oxydants sont fixées à 1 mM ; les concentrations de chacun des membres du couple de substrats varient de 1 à 4 mM environ. Ce mélange est réalisé dans un milieu tamponné de 4,5 à 6 environ, à une température de 20 à 25°C environ, jusqu'au développement de la ou des colorations.

La condensation des substrats oxydés avec les composés aromatiques conduit à la formation de composés colorés qui précipitent in *situ* à l'emplacement même de la transformation des précurseurs (substrats chromogènes).

Pour que le support à colorer reste incolore en présence des substrats chromogènes, il est nécessaire d'obtenir une inhibition totale de l'activité du catalyseur d'oxydation.

Par inhibition totale, on entend une inhibition variant d'environ 80% à environ 100%, et de préférence d'environ 90% à environ 98%.

La réactivation, même partielle, du catalyseur d'oxydation par photolyse suffit pour déclencher le procédé de génération de couleurs.

On entend par réactivation partielle une réactivation variant d'environ 10% à environ 30%, et de préférence d'environ 20% à environ 25%. Ainsi, une récupération après irradiation de l'activité du catalyseur de l'ordre d'environ 25% suffit pour déclencher le procédé de génération de couleurs.

Sous l'effet d'un stimulus lumineux les groupements photolabiles s'éliminent par photolyse en laissant la cible initiale (catalyseur d'oxydation) chimiquement intacte et biologiquement active. Le catalyseur d'oxydation obtenu est partiellement réactivé.

Il se produit ensuite une réaction chimique telle faisant intervenir le substrat aromatique, le catalyseur d'oxydation totalement ou partiellement réactivé, un oxydant et le composé aromatique, ce qui conduit à l'obtention d'un produit coloré, Le procédé de l'invention présente plusieurs avantages, notamment par rapport à un procédé de coloration classique utilisant des encres. En effet, selon le procédé de l'invention il est possible d'obtenir une coloration plus rapide des supports qu'avec l'impression point par point, une meilleure résolution, la taille du pixel correspondant à la dimension du catalyseur d'oxydation immobilisé, et les problèmes liés au colmatage des têtes distributrices d'encres.

Vise également est un procédé tel que défini ci-dessus dans lequel le support est constitué de macromolécules, par exemple de la cellophane, et porte un système catalytique tel que décrit plus haut. La face du film au contact de la peau est striée pour jouer un rôle de collimateur vis-à-vis des photons gamma. Selon encore un autre aspect de l'invention de grand intérêt l'invention vise l'application du procédé de génération de couleurs sur la peau en cosmétique. D'autres aspects et avantages de la présente invention apparaîtront dans les exemples qui suivent qui illustrent la génération de couleurs sur un support en coton ou en polyester.

### EXEMPLE 1 : Utilisation de l'hémoglobine

### 1) Inhibition photoréversible de l'hémoglobine

L'hémoglobine bovine en solution aqueuse (32 µM) est traitée par différentes concentrations de 1-(2-nitrophényl)-diazoéthane (NP-diazo) en solution dans du DMSO, à 20°C pendant 1 h, à l'obscurité. La concentration finale en DMSO ne doit pas excéder 5%. Les concentrations de NP-diazo varient de 50 à 100 équivalents par rapport à l'hémoglobine. La réaction de couplage est arrêtée par addition d'une solution de tampon acétate 100 mM à pH 4,4 (1 équivalent par rapport au NP-diazo). Les temps de contacts varient de 10 à 30 min. Le mélange réactionnel est ensuite dialysé contre de l'eau, entre 4 et 20°C, entre 1 et 16 heures contre 1000 volumes d'eau. Le conjugué est stocké à 20°C.

Le pourcentage d'inhibition de l'oxydation de l'ABTS [sel de diammonium de l'acide 2,2'-azino-bis(3-ethylbenzothiazolinone-6-sulfonique), 1 mM] est déterminé avant dialyse sur les plaques de microtitration de 96 puits (Costar, Corning Incorporated) dans du tampon acétate de sodium, 50 mM, pH 5 en présence de 1 mM de peroxyde d'hydrogène. Le nombre de molécules fixées par molécule d'hémoglobine est déterminé par spectrométrie de masse (électrospray). Les résultats sont rassemblés dans le tableau 1.

**TABLEAU 1**

| Conjugés NPE-hémoglobine | Nombres de NPE fixés/molécule Hb | Activité résiduelle (%) |
|---|---|---|
| Hémoglobine native | 0 | 100 |
| Hb-50* | de 0 à 5 | 12,6 |
| Hb-75* | de 1 à 6 | 5,4 |
| Hb-100* | de 1 à 6 | 2,5 |

| | | |
|---|---|---|
| * 50, 75 et 100 correspondant au nombre d'équivalents NPE introduits dans le milieu réactionnel. | | |

Le traitement de l'hémoglobine par NP-diazo, aboutit à une forte inhibition de l'activité d'oxydation (supérieure à 90%)

### 2) Photoréactivation du catalyseur d'oxydation

Le catalyseur d'oxydation est réactivé par irradiation des solutions des différents conjugués (1 mg/mL) dans du tampon acétate de sodium (25 mM, pH 4,4). La photolyse a lieu à 366 nm (lampe UV de 100 W, 7 mW/cm² à une distance de 30 cm); les temps d'irradiation varient de 5 à 30 min. Cette étape est avantageusement réalisée en présence de 5mM de 2-éthanolamine afin de pièger les éventuelles réactions croisées entre produits de photolyse et hémoglobine.

Après 30 minutes d'irradiation, la déprotection de l'hémoglobine est totale.

La restauration de l'activité enzymatique est déterminée dans des plaques de microtitration comme précédemment décrit, en présence d'ABTS (1 mM) et d'H₂O₂ (1 mM).

Après 30 min.; d'irradiation, 57% de l'activité est récupérée pour Hb-50, 28% pour Hb-75 et 16% pour Hb -100. Ces pourcentages d'activité sont suffisants pour déclencher par la suite le procédé de génération de la coloration.

### 3) Accrochage des enzymes sur le support à colorer

Le catalyseur d'oxydation, hémoglobine bovine, se fixe de façon covalente sur les tissus en polyester pré -imprégnés avec l'alginate de calcium.

Les fonctions carboxyliques du polysaccharide sont activées dans l'eau, en présence du couple EDC/NHS, pendant un intervalle de temps variant de 10 à 30 min. Pour le 1 cm² de tissu, les quantités d'activateurs carbodümide/N-hydroxysuccinimide sont de 200 µg chacune dans des volumes variant de 2 à 4 mL. Le tissu ainsi activé est plongé dans une solution de catalyseur d'oxydation à une concentration de 50 à 200 µg/mL à pH 6. Le temps d'incubation varie de 45 à 90 min.

Dans ces conditions, le tissu est ainsi prêt à être irradié pour réactiver le catalyseur d'oxydation, puis imprégné avec la solution contenant le ou les couples de substrats chromogènes.

### 4) Imprégnation par les couples de substrats chromogènes et l'oxydant

### a) Utilisation du couple DMPDA/4-chloronaphthol

Le tissu précédemment réactivé est plongé dans une solution tamponnée entre pH 4,5 et 6, comprenant la diméthyl-phénylènediamine (solution mère préparée dans l'eau, 110 mM), le 4-chloronaphthol (solution mère préparée dans de l'éthanol, 110 mM). Leurs concentrations finales varient de 1 à 4 mM. L'oxydant, le peroxyde d'hydrogène, est additionné ; sa concentration est avantageusement fixée à 1 mM. La réaction est conduite entre 20 et 25°C, jusqu'au développement de la couleur bleue.

### b) Utilisation du couple MBTH/4-chloronaphthol

Comme précédemment décrit dans a), le tissu réactivé est plongé dans une solution tamponnée entre pH 4,5 et 6, comprenant la 3-méthyl-benzothiazoline (MBTH, solution mère préparée dans l'eau, 110 mM), le 4-chloronaphthol et l'oxydant. Les concentrations des différentes espèces ainsi que les conditions opératoires sont les mêmes que pour a). Dans ce cas, la couleur rouge est générée.

### c) Utilisation du couple MBTH/1,3-naphthalènediol

Comme précédemment décrit dans a), le tissu réactivé est plongé dans une solution tamponnée entre pH 4,5 et 6, comprenant la 3-méthyl-benzothiazoline (MBTH), le 1,3-napthalènediol (solution mère préparée dans de l'éthanol, 110 mM) et l'oxydant. Les concentrations des différentes espèces ainsi que les conditions opératoires sont les mêmes que pour a). Dans ce cas, la couleur jaune est développée.

## Revendications

1. Systèmes catalytiques pour la génération de couleurs sur un support, **caractérisés en ce qu'**ils comprennent un ou plusieurs catalyseurs d'oxydation inactivés constitués par des hémoglobines inactivées par des groupes photolabiles constitués par un groupement - o-nitrophényle.

2. Systèmes catalytiques selon la revendication 1, **caractérisés en ce que** les catalyseurs d'oxydation sont associés à des substrats chromogènes utilisés en combinaison avec des composés aromatiques.

3. Systèmes catalytiques selon la revendication 2, **caractérisés en ce que** le substrat est choisi parmi l'hydrazone de la 3-méthyl-2-benzothiazolinone (MBTH) et des dérivés de la phénylènediamine, comme la diméthyl phénylènediamine et la diéthyl phénylènediamine.

4. Systèmes catalytiques selon la revendication 2 ou 3, **caractérisés en ce que** les composés aromatiques utilisables pour réagir avec les substrats chromogènes oxydés et conduire à un précipité coloré, sont des composés aromatiques mono-, di-, ou polycycliques.

5. Systèmes catalytiques selon la revendication 4, **caractérisés en ce que** les composés aromatiques sont choisis parmi les chloronaphtols, les naphtalènediols, les aminophénols, les catéchols, les chlorophénols, le phénol, le gaïacol.

6. Procédé de génération de couleurs sur un support, **caractérisé en ce qu'**il comprend la réactivation sous l'effet d'un stimulus lumineux de systèmes catalytiques comprenant un ou plusieurs catalyseurs d'oxydation inactivés, tels que définis dans l'une quelconque des revendications 1 à 5, imprégnant ledit support.

7. Procédé selon la revendication 6, **caractérisé en ce qu'**il comprend,
a) une étape d'inhibition photoréversible d'un ou plusieurs catalyseurs d'oxydation,
b) une étape d'immobilisation du ou des catalyseurs d'oxydation temporairement inactivé(s) tels qu'obtenus à l'issue de l'étape a) sur un support à colorer, ladite étape d'immobilisation étant notamment effectuée par trempage du support à colorer dans une solution comprenant le ou les catalyseurs d'oxydation inactivés,
c) une étape de stimulation lumineuse du support imprégné tel qu'obtenu à l'issue de l'étape b) permettant de réactiver le ou les catalyseurs d'oxydation temporairement inactivés,
d) une étape d'imprégnation du support sur lequel ont été immobilisés le ou les catalyseurs d'oxydation à l'issue de l'étape c), avec une solution comprenant un ou plusieurs substrats chromogène(s), un ou plusieurs composés aromatiques et un ou plusieurs oxydants, permettant ainsi de développer les couleurs sur le support à l'endroit activé par la stimulation lumineuse.

8. Procédé selon la revendication 6 ou 7, **caractérisé en ce que** le support est formé d'un tissu de fibres naturelles et/ou de fibres synthétiques ou encore par du papier.

9. Procédé selon la revendication 8, **caractérisé en ce que** le support en fibres naturelles est en coton.

10. Procédé selon la revendication 8, **caractérisé en ce que** les fibres synthétiques sont en un matériau polymère.

11. Procédé selon la revendication 10, **caractérisé en ce que** le matériau polymère est un polyester.

12. Procédé selon l'une quelconque des revendications 7 à 8 et 10 à 11, **caractérisé en ce que**, lorsque le support à colorer est un tissu synthétique, on procède, avant l'étape b) d'immobilisation, à une étape d'imprégnation préalable par de l'alginate, notamment de l'alginate de calcium.

13. Procédé selon la revendication 12, **caractérisé en ce qu'**il comprend une étape de fixation covalente du catalyseur d'oxydation en procédant à une étape d'activation des fonctions acide carboxylique de l'alginate en esters activés, notamment à l'aide de couples carbodiimide hydrosoluble et N-hydroxysuccinimide.

14. Procédé selon la revendication 12 ou 13, **caractérisé en ce que**, à l'issue de l'étape préalable d'imprégnation du support à colorer avec de l'alginate, on procède à une étape de séchage.

## Claims

1. Catalytic systems for the generation of colors on a support, comprising one or more inactivated oxidation catalysts consisting of hemoglobins inactivated by photolabile groups consisting of o-nitrophenyl group.

2. The catalytic systems according to claim 1, wherein the oxidation catalysts are associated with chromogenic substrates used in combination with aromatic compounds.

3. The catalytic systems according to claim 2, wherein the substrate is chosen from 3-methyl-2-benzothiazolinone hydrazone (MBTH) and phenylenediamine derivatives, such as dimethyl-phenylenediamine and diethylphenylenediamine.

4. The catalytic systems according to claim 2 or 3, wherein the aromatic compounds which can be used to react with the oxidized chromogenic substrates and to result in a colored precipitate are mono-, di- or polycyclic aromatic compounds.

5. The catalytic systems according to claim 4, wherein the aromatic compounds are chosen from chloronaphthols, naphthalenediols, aminophenols, catechols, chlorophenols, phenol or guaiacol.

6. A process for the generation of colors on a support, comprising the reactivation, under the effect of a light stimulus, of one or more inactivated oxidation catalysts as defined in any one of claims 1 to 5 impregnating said support.

7. The process according to claim 6, comprising:
a) a photoreversible inhibition step of one or more oxidation catalysts,
b) an immobilization step on a support to be colored of the temporarily inactivated oxidation catalyst or catalysts as obtained at the end of step a), said step of immobilization being carried out in particular by dipping the support to be colored in a solution comprising the inactivated oxidation catalyst or catalysts,
c) a light stimulation step of the impregnated support as obtained at the end of step b) which makes it possible to reactivate the temporarily inactivated oxidation catalyst or catalysts,
d) an impregnation step of the support on which the oxidation catalyst or catalysts have been immobilized on conclusion of step c) with a solution comprising one or more chromogenic substrates and one or more oxidizing agents, thus making it possible to develop the colors on the support at the spot activated by the light stimulation.

8. The process as claimed in claim 6 or 7, wherein the support is formed by a fabric of natural fibers and/or of synthetic fibers or by paper.

9. The process according to claim 8, wherein the support in natural fibers is cotton.

10. The process according to claim 8, wherein the synthetic fibers are in a polymer material.

11. The process according to claim 10, wherein the polymer material is polyester.

12. The process according to any one of claims 7 to 8 and 10 to 11, wherein when the support to be colored is a synthetic fabric, a preliminary step of impregnation by alginate, in particular calcium alginate, is carried out before immobilization step b).

13. The process according to claim 12, comprising a step of covalent binding of the oxidation catalyst by carrying out an activation step of the carboxylic acid functional groups of said alginate to give activated esters, in particular using water-soluble carbodiimide and N-hydroxysuccinimide pairs.

14. The process according to claim 12 or 13, wherein at the end of the preliminary impregnation step of the support to be colored with alginate, a drying step is carried out.

## Patentansprüche

1. Katalytische Systeme für die Erzeugung von Farben auf einem Träger, **dadurch gekennzeichnet, dass** sie einen oder mehrere inaktivierte Oxidationskatalysatoren umfassen, die aus Hämoglobinen bestehen, welche durch photolabile Gruppen inaktiviert sind, die aus einer o-NitrophenylGruppe bestehen.

2. Katalytische Systeme gemäß Anspruch 1, **dadurch gekennzeichnet, dass** die Oxidationskatalysatoren mit chromogenen Substraten assoziiert sind, die in Kombination mit aromatischen Verbindungen verwendet werden.

3. Katalytische Systeme gemäß Anspruch 2, **dadurch gekennzeichnet, dass** das Substrat aus 3-Methyl-2-benzothiazolinonhydrazon (MBTH) und Derivaten von Phenylendiamin, wie Dimethylphenylendiamin und Diethylphenylendiamin, ausgewählt ist.

4. Katalytische Systeme gemäß Anspruch 2 oder 3, **dadurch gekennzeichnet, dass** die aromatischen Verbindungen, die zur Umsetzung mit den oxidierten chromogenen Substraten und zur Gewinnung eines farbigen Niederschlags verwendbar sind, mono-, di- oder polycyclische aromatische Verbindungen sind.

5. Katalytische Systeme gemäß Anspruch 4, **dadurch gekennzeichnet, dass** die aromatischen Verbindungen aus Chlornaphtholen, Naphthalindiolen, Aminophenolen, Brenzkatechinen, Chlorphenolen, Phenol, Guajacol ausgewählt sind.

6. Verfahren zur Erzeugung von Farben auf einem Träger, **dadurch gekennzeichnet, dass** es die Reaktivierung von katalytischen Systemen, die einen oder mehrere inaktivierte Oxidationskatalysatoren umfassen, gemäß einem der Ansprüche 1 bis 5, mit denen der Träger imprägniert ist, unter der Wirkung eines Lichtreizes umfasst.

7. Verfahren gemäß Anspruch 6, **dadurch gekennzeichnet, dass** es Folgendes umfasst:
a) einen Schritt der photoreversiblen Hemmung eines oder mehrerer Oxidationskatalysatoren;
b) einen Schritt der Immobilisierung des oder der vorübergehend inaktivierten Oxidationskatalysatoren, wie sie in Schritt a) erhalten wurden, auf einem zu färbenden Träger, wobei der Schritt der Immobilisierung insbesondere durchgeführt wird, indem man den zu färbenden Träger in eine Lösung eintaucht, die den oder die inaktivierten Oxidationskatalysatoren umfasst;
c) einen Schritt der Lichtstimulierung des imprägnierten Trägers, wie er in Schritt b) erhalten wurde, wodurch der oder die vorübergehend inaktivierten Oxidationskatalysatoren reaktiviert werden;
d) einen Schritt der Imprägnierung des Trägers, auf dem der oder die Oxidationskatalysatoren in Schritt c) immobilisiert wurden, mit einer Lösung, die ein oder mehrere chromogene Substrate, ein oder mehrere aromatische Verbindungen und ein oder mehrere Oxidationsmittel umfasst, wodurch die Farben auf dem Träger an der durch die Lichtstimulation aktivierten Stelle entwickelt werden können.

8. Verfahren gemäß Anspruch 6 oder 7, **dadurch gekennzeichnet, dass** der Träger aus einem textilen Gebilde aus Naturfasern und/oder synthetischen Fasern oder Papier gebildet ist.

9. Verfahren gemäß Anspruch 8, **dadurch gekennzeichnet, dass** der aus Naturfasern gebildete Träger aus Baumwolle besteht.

10. Verfahren gemäß Anspruch 8, **dadurch gekennzeichnet, dass** die synthetischen Fasern aus einem polymeren Material bestehen.

11. Verfahren gemäß Anspruch 10, **dadurch gekennzeichnet, dass** das polymere Material ein Polyester ist.

12. Verfahren gemäß einem der Ansprüche 7 bis 8 und 10 bis 11, **dadurch gekennzeichnet, dass** man, wenn der zu färbende Träger ein synthetisches Gewebe ist, vor dem Schritt der Immobilisierung b) einen Vorimprägnierungsschritt mit Alginat, insbesondere Calciumalginat, durchführt.

13. Verfahren gemäß Anspruch 12, **dadurch gekennzeichnet, dass** es einen Schritt der kovalenten Bindung des Oxidationskatalysators umfasst, indem man einen Schritt der Aktivierung der Carbonsäurefunktionen des Alginats zu aktivierten Estern durchführt, insbesondere mit Hilfe von Paaren aus wasserlöslichem Carbodiimid und N-Hydroxysuccinimid.

14. Verfahren gemäß Anspruch 12 oder 13, **dadurch gekennzeichnet, dass** man nach dem Schritt der Vorimprägnierung des zu färbenden Trägers mit Alginat einen Trocknungsschritt durchführt.
